# EUROPEAN PATENT APPLICATION

(11) **EP 3 582 222 A1**
(43) Date of publication of application: **18.12.2019**
(21) Application number: 19179631.7
(22) Date of filing: 12.06.2019
(51) Int. Cl.: G11B 27/031, G11B 27/10, G10L 13/027, G10L 13/06

(54) **SYSTEM AND METHOD FOR GENERATING CUSTOMIZED DIGITAL AUDIOVISUAL CONTENT WITH PRERECORDED HUMAN SPEECH COMPONENT**

(30) Priority: 13.06.2018 IT 201800006260
(71) Applicant: DOXEE S.p.A., 41123 Modena (IT)
(72) Inventor: GENERALI, Matteo, 41121 MODENA (IT); MAGNANI, Matteo, 42122 REGGIO EMILIA (IT); BIANCO, Alessandro, 41037 MIRANDOLA MO (IT)
(74) Representative: Modiano, Micaela Nadia

(57) **Abstract**

A system (10) for generating customized digital audiovisual content with prerecorded human speech component, and a customized digital audiovisual content comprising a video component and an audio component, are provided. The system (10) comprises a data server computer (14), configured to produce a digital container comprising at least basic data of the customized content, and a client computer (34), comprising means (42) for the playback of the customized content, the data server computer (14) communicating with the client computer (34) via a telematic communication network (12). The system (10) furthermore comprises a speech catalog server computer (24) which comprises catalog storage means (26) adapted to store a plurality of catalogs comprising prerecorded human speech tracks, and first retrieval means (28) adapted to select and retrieve from the catalog storage means (26) a prerecorded human speech track that corresponds to a single alphanumeric text data portion, the speech catalog server computer (24) communicating with the client computer (34) via the telematic communication network (12).

## Description

The present invention relates to a system and a method for generating customized digital audiovisual content with prerecorded human speech component, useful and practical, albeit not exclusively, in the field of communication and services to customers provided remotely, for creating customized digital audiovisual content having purposes of promotion of goods and/or services, or suitable for explaining to a customer the content of an electronic document, such as a bank statement, a bill or an invoice of which he is the recipient.

The customized digital audiovisual content, hereinafter identified for the sake of brevity also as customized content, comprises both a video component and an audio component, and is used currently by companies, particularly by banks, insurance companies and service companies, to communicate remotely with their customers more effectively and more economically than traditional paper communications.

A customized content can in fact accompany an electronic document, such as a bank statement, a bill or an invoice, being incorporated therein or connected thereto, in order to guide the customer in reading and understanding said electronic document.

Furthermore, a customized content can also replace traditional means of communication entirely, for example providing a valid alternative to the fiscal document of an invoice when the fiscally relevant content is already transmitted via an electronic route required by law (e.g., electronic invoicing); or it can constitute a modern and effective means for communicating information to the recipient and request him to provide active interactions, for example an audiovisual explanation of the purposes of personal data treatment which comprises the acquisition of informed consent for treatment in electronic form.

The audio component is a very important expression medium within a customized content. By way of example, the audio component of a customized content can greet the customer by name and surname and then explain the various parts of the bank statement, bill or invoice, reading its most important aspects, such as the due date and the balance.

Generally, optimum speech composition of the audio component of the customized content requires the adjustment of two fundamental elements: 1) the degree of customization, i.e., the type and quantity of information on the recipient on which a customized content is based; and 2) the quality of the voice, which must approximate increasingly the voice acting of a television or radio advert as the importance of the customized content in terms of communication, for example of the promotional type, increases.

In the field of digital communication with customers performed remotely, customized content must be generated and presented to said customers at high speed, thus avoiding annoying pauses due to loading, and at a sufficiently high and uniform quality level over time.

Various solutions for generating customized digital audiovisual content are currently known, in particular comprising a synthesized speech, i.e., an audio speech derived from a process for speech synthesis, or Text To Speech (TTS in acronym), obtained by means of known procedures starting from alphanumeric text data.

Typically, a customized content, comprising its audio component with speech synthesis, is created remotely by utilizing the computing power of powerful server computers used by the senders and is then sent to client computers used by the recipients via a telematic communication network, such as the Internet.

However, these solutions of a known type, despite being effective in the customization of digital audiovisual content, are not free from drawbacks, which include the fact that TTS systems, despite being advanced, are unable to simulate effectively the tone and emphasis that a professional human speaker can give to his or her voice when recording a voice message, for example of the promotional type.

Another drawback of these solutions of the known type resides in that the generation of TTS audio components of large quantities of customized contents stresses the associated computers, particularly in terms of computational resource load, since they are pushed to work constantly with very high load percentages.

The aim of the present invention is to overcome the limitations of the background art that have been described above, devising a system and a method for generating customized digital audiovisual content with prerecorded human speech component that allow to obtain better effects than those obtainable with known solutions and/or similar effects with a lower cost and with higher performance.

Within the scope of this aim, an object of the present invention is to conceive a system and a method for generating customized digital audiovisual content with prerecorded human speech component that allow to provide a direct and effective communication strategy, aimed at capturing and holding the attention of end users, i.e., of the recipients of the customized content.

Another object of the present invention is to devise a system and a method for generating customized digital audiovisual content with prerecorded human speech component that allow to obtain an audio component of the customized content that is as "natural" as possible.

A further object of the present invention is to conceive a system and a method for generating customized digital audiovisual content with prerecorded human speech component that allow a speech composition of the audio component of the customized content that is optimum and flexible with respect to the type and quantity of information on the recipient on whom a customized content is based.

Another object of the present invention is to devise a system and a method for generating customized digital audiovisual content with prerecorded human speech component that allow to reduce the stress to which computers are subjected for the creation of the customized content, in particular reducing the load of the computational resources of said computers.

Not least object of the present invention is to provide a system and a method for generating customized digital audiovisual content with prerecorded human speech component that are highly reliable, relatively simple to provide and at competitive costs if compared with the background art.

This aim, these objects and others which will become better apparent hereinafter are achieved by a system for generating customized digital audiovisual content with prerecorded human speech component, a customized digital audiovisual content comprising a video component and an audio component, comprising a data server computer, configured to produce a digital container comprising at least basic data of said customized content, said basic data of said customized content comprising at least one template, i.e., a fixed part, and a set of personal data, i.e., a variable or customizable part, and a client computer, which comprises means for the playback of said customized content, said data server computer communicating with said client computer via a telematic communication network, characterized in that said client computer comprises generation means which comprise:
- an alphanumeric text data selection module configured to extract from said digital container a sequence of alphanumeric text data comprised within said basic data, i.e., a sequence of one or more phrase portions, and to select from said alphanumeric text data sequence a single alphanumeric text data portion, i.e., a single phrase portion;
- a concatenation module configured to associate in an orderly manner with an existing track sequence, i.e., said audio component of said customized digital audiovisual content, a prerecorded human speech track which corresponds to said single alphanumeric text data portion, i.e., to said single phrase portion;

- a customized video component generation module configured to create said video component of said customized digital audiovisual content starting from said basic data comprised in said digital container, in particular templates and personal data; and
- a customized content synchronization module configured to combine said video component and said audio component of said customized digital audiovisual visual content and to synchronize their simultaneous playback;
and in that said system comprises a speech catalog server computer which comprises catalog storage means adapted to store a plurality of catalogs comprising prerecorded human speech tracks, and first retrieval means adapted to select and retrieve from said catalog storage means said prerecorded human speech track that corresponds to said single alphanumeric text data portion, said speech catalog server computer communicating with said client computer via said telematic communication network.

This aim and these objects are also achieved by a method for generating customized digital audiovisual content with prerecorded human speech component, a customized digital audiovisual content comprising a video component and an audio component, characterized in that it comprises the steps of:
- sending a digital container comprising at least basic data of said customized content, said basic data of said customized content comprising at least one template, i.e., a fixed part, and a set of personal data, i.e., a variable or customizable part, by virtue of transceiver means of a data server computer toward a client computer;
- receiving said digital container sent by said data server computer, by virtue of transceiver means of said client computer;
- extracting from said digital container a sequence of alphanumeric text data comprised in said basic data, i.e., a sequence of one or more phrase portions, by means of an alphanumeric text data selection module comprised in generation means of said client computer;
- selecting from said sequence of alphanumeric text data a new single alphanumeric text data portion, i.e. a single phrase portion, by means of said alphanumeric text data selection module comprised in said generation means of said client computer;
- verifying whether said single alphanumeric text data portion is a prerecorded human type phrase portion;
- in case of a positive outcome, requesting services offered by a speech catalog server computer by means of a "catalog call" sent to said speech catalog server computer, said "catalog call" comprising said single alphanumeric text data portion, by virtue of transceiver means of said client computer;
- receiving said "catalog call" of said client computer, in particular comprising said single alphanumeric text data portion, by virtue of transceiver means of said speech catalog server computer;
- verifying whether catalog storage means comprised in said speech catalog server computer store in various available catalogs a prerecorded human speech track that corresponds to said single alphanumeric text data portion comprised in said "catalog call";
- in case of a positive outcome, selecting and retrieving said prerecorded human speech track that corresponds to said single alphanumeric text data portion comprised in said "catalog call", by virtue of first retrieval means of said speech catalog server computer;
- sending said prerecorded human speech track, by virtue of transceiver means of said speech catalog server computer, toward said client computer;
- receiving said prerecorded human speech track sent by said speech catalog server computer, by virtue of transceiver means of said client computer;
- associating in an orderly manner with an existing track sequence, i.e., said audio component of said customized digital audiovisual content, said speech track that corresponds to said single alphanumeric text data portion, i.e., to said single phrase portion, by means of a concatenation module that is comprised in said generation means of said client computer;
- verifying whether in said sequence of alphanumeric text data comprised in said basic data, i.e., in the sequence of one or more phrase portions, extracted from said digital container, there is a new single alphanumeric text data portion;
- in case of a positive outcome, returning to selecting from said sequence of alphanumeric text data a new single alphanumeric text data portion;
- in case of a negative outcome, creating said video component of said customized digital audiovisual content starting from said basic data comprised in said digital container, in particular templates and personal data, by means of a customized video component generation module comprised in said generation means of said client computer;
- combining said video component and said audio component of said customized digital audiovisual content and synchronizing their simultaneous playback, by means of a customized content synchronization module comprised in said generation means of said client computer; and
- playing back said customized content generated by said generation means, displaying it and presenting it by virtue of playback means comprised in said client computer.

Further characteristics and advantages of the invention will become better apparent from the description of a preferred but not exclusive embodiment of the system and of the method for generating customized digital audiovisual content with prerecorded human speech component according to the invention, illustrated by way of non-limiting example in the accompanying drawings, wherein:
Figure 1 is a block diagram which shows schematically an embodiment of the system for generating customized digital audiovisual content with prerecorded human speech component, according to the present invention;
Figure 2 is a block diagram which shows schematically a detail of the embodiment of the system for generating customized digital audiovisual content with prerecorded human speech component, according to the present invention, shown in Figure 1;
Figures 3a and 3b are a flowchart which shows schematically an embodiment of the method for generating customized digital audiovisual content with prerecorded human speech component, according to the present invention.

It should be noted that, in the present description, the term "track" refers in summary to an audio track, i.e., an audio file that comprises an audio content of various kinds and/or derived from various sources.

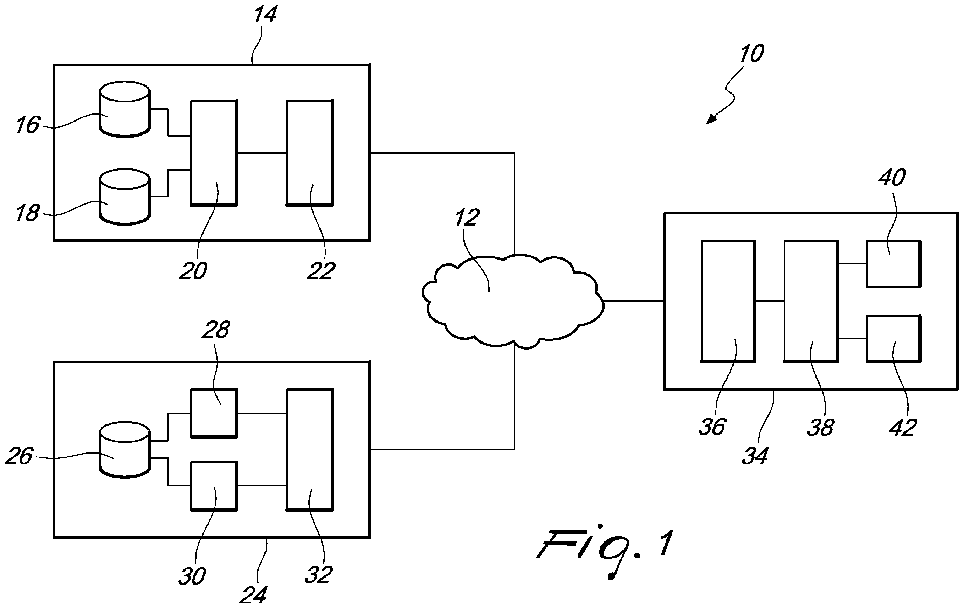

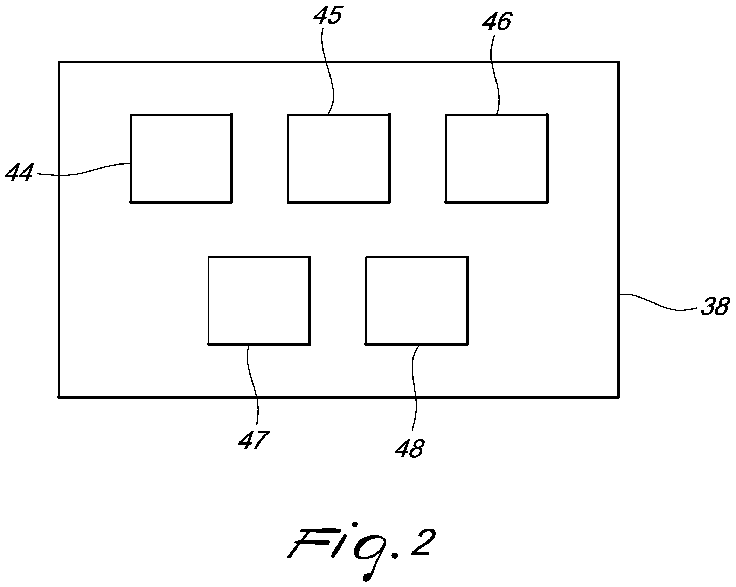

With reference to Figures 1 and 2, the system for generating customized digital audiovisual content with prerecorded human speech component according to the invention, generally designated by the reference numeral 10, comprises substantially at least one data server computer 14, at least one speech catalog server computer 24, and at least one client computer 34 operated by the recipient of the customized content. The client computer 34 communicates with the data server computer 14 and the speech catalog server computer 24 via a telematic communication network 12, such as for example the Internet.

The data server computer 14 is configured to produce in output a digital container comprising the basic data and information of the customized content that will be generated by the client 34. The digital container comprises both a fixed part (template) and a variable or customizable part (personal data). The digital container may furthermore comprise a player. The basic data of the customized content comprise at least one template, a set of personal data and preferably also a player, which will be described in detail hereinafter.

The data server 14 comprises template storage means 16, adapted to store a plurality of templates, and personal data storage means 18, adapted to store a plurality of personal data.

The web templates stored in the storage means 16, preferably HTML templates constituted by a portion of code in HTML language, at least in its version 5, are standard models or "presentation specifications" which a company uses for remote communication toward its customers. Each template has a clearly defined graphic appearance, which comprises in particular the associated animations (images, background music, and so forth).

The personal data stored in the storage means 18 are instead all the data and information related to the individual recipients of the customized content, for example the customers of a telephone company. In practice, each set of personal data is contained in the electronic document that the company wishes to send to a specific recipient customer.

By way of example, in the case of a telephone bill, said personal data of the customer who is the recipient of said bill can include the name and surname of the customer, the taxpayer identification code of the customer, the identification code of the contract subscribed by the customer, the monthly cost for local calls, the monthly cost for long-distance calls, the monthly cost for data traffic, the balance of the bill, and so forth.

Both the template and the personal data comprise a variable quantity of alphanumeric text data.

The data server 14 comprises retrieval means 20, in particular adapted to select and retrieve at least one template stored in said template storage means 16 and to select and retrieve a set of personal data related to a single recipient, stored in said personal data storage means 18.

The selection and retrieval of the template and of the set of personal data by the retrieval means 20 occurs on the basis of the type of electronic document that the company wishes to send, on the basis of the type of remote communication that the company intends to perform, and/or on the basis of the specific customer who is the recipient of the sent electronic document.

The means 20 for retrieving the template and the set of personal data enclose the retrieved information, related to a single recipient, within a digital container, preferably an HTML container constituted by a portion of code in HTML language, at least in its version 5.

In the digital container thus generated, the retrieval means 20 can also include a player, preferably using a corresponding PURL (Personalized Uniform Resource Locator). The player comprises the functions and instructions required to generate the video component and the audio component of the customized content. The player can furthermore comprise the functions and instructions required to compose and synchronize the two generated components. The player can furthermore comprise the functions and instructions required for animation control. Preferably, this player is constituted by a portion of code in JavaScript language.

Finally, the data server 14 comprises transceiver means 22, adapted to send the digital container toward the client 34, via the telematic communication network 12.

The speech catalog server computer 24 is configured to retrieve and transmit in output, following an appropriate request sent by the client 34, termed "catalog call", a prerecorded speech track or clip to be included in the audio component of the customized content that will be generated by the client 34. It should be noted that the audio component of a customized content can comprise one or more prerecorded human speech tracks or clips.

The speech catalog server 24 comprises catalog storage means 26, adapted to store a plurality of catalogs which comprise prerecorded human speech tracks, each of which has been recoded at the maximum available audio quality by a professional human speaker.

Each catalog comprises a specific type of prerecorded human speech track, i.e., a plurality of variations for the same portion of the audio component of a customized content. For example, the catalog storage means 26 can store a first catalog comprising variations of the name of the recipients, a second catalog comprising variations of the name of the products, a third catalog comprising variations of the offers, a fourth catalog comprising variations of the numeric values, a fifth catalog comprising variations of the dates, a sixth catalog comprising variations of the addresses, and so forth.

In one embodiment of the invention, the catalog storage means 26 are geographically distributed in order to increase the speed and thus reduce the transmission times of the prerecorded human speech tracks, especially in the case of mobile devices. The catalog storage means 26 comprise a plurality of copies of partial catalogs comprising the prerecorded human speech tracks used more frequently, stored locally or in proximate geographical areas, and a centralized copy of complete catalogs comprising all the prerecorded human speech tracks currently available, stored in a remote geographical area.

The speech catalog server 24 comprises transceiver means 32. The transceiver means 32 are adapted to receive from the client 34 a service request, termed "catalog call", via the telematic communication network 12. The "catalog call" comprises a single alphanumeric text data portion comprised in the basic data enclosed in the digital container, previously generated by the data server 14 and received by the client 34. As mentioned the alphanumeric text data are comprised both in the template and in the personal data, which in turn are comprised in the basic data enclosed in the digital container.

The speech catalog server 24 comprises first retrieval means 28, in particular adapted to select and retrieve from the catalog storage means 26 a prerecorded human speech track that corresponds to the single alphanumeric text data portion comprised in the "catalog call". In practice, the selection and retrieval of the prerecorded human speech track by the retrieval means 28 occurs on the basis of the positive outcome of an availability check of said prerecorded human speech track in the catalog storage means 26.

However, it is not always possible to identify a prerecorded human speech track that corresponds to the single alphanumeric text data portion comprised in the "catalog call". For example, if a catalog stores first names of people, a customized content intended for a person whose first name is not present in the same catalog would not have a match.

In order to avoid leaving a "blank" in the audio component of the customized content, in one embodiment of the invention, each catalog of the catalog storage means 26 furthermore comprises a predefined prerecorded human speech track that corresponds to the type of prerecorded human speech track, i.e., a predefined variation for the same portion of the audio component of a customized content. The "catalog call" furthermore comprises the type of the portion of alphanumeric text data comprised in the basic data enclosed in the digital container, previously generated by the data server 14 and received by the client 34. Furthermore, the speech catalog server 24 comprises second retrieval means 30, in particular adapted to select and retrieve from the catalog storage means 26 of a predefined prerecorded human speech track that corresponds to the type of the single alphanumeric text data portion comprised in the "catalog call". The predefined prerecorded human speech track is selected and retrieved every time it is not possible to identify a specific prerecorded human speech track. In practice, the selection and retrieval of the predefined prerecorded human speech track by the retrieval means 30 occurs on the basis of the positive outcome of an availability check of said predefined prerecorded human speech track in the catalog storage means 26.

By way of example, a catalog that stores the first names of people would comprise a set of specific prerecorded human speech tracks that correspond to the first names "Claudio", "Luca", "Alessia", "Beatrice" and so forth, and a predefined prerecorded human speech track that corresponds to the generic noun "customer".

Following the selection and retrieval of a prerecorded human speech track, whether specific or predefined, the transceiver means 32 of the speech catalog server 24 are furthermore adapted to send this prerecorded human speech track toward the client 34, via the telematic communication network 12. In practice, this track is a portion of the audio component of a customized content that will be generated by the client 34.

In one embodiment of the invention, the system 10 for generating customized digital audiovisual content with prerecorded human speech component comprises furthermore a Text To Speech (in acronym TTS) server computer 50. The client computer 34 communicates with the TTS server computer 50 via the telematic communication network 12.

The TTS server 50 is configured to generate in output, following an appropriate request sent by the client 34, termed "TTS call", a speech synthesis track that corresponds to the previously selected single alphanumeric text data portion.

The TTS server 50 comprises a TTS engine, i.e., an engine specifically implemented and optimized for generating, for example following specific commands in the SSML (Speech Synthesis Markup Language) language, a speech synthesis track, derived from a speech synthesis process, or Text To Speech (in acronym TTS), performed by means of known procedures starting from text data in input.

The speech synthesis track generated by the TTS server 50, in particular generated by the corresponding TTS engine, is part of the audio component of the customized content that will be generated by the client 34.

In this embodiment of the invention, the transceiver means 36 of the client 34 are furthermore adapted to send the "TTS call" to the TTS server 50, via the telematic communication network 12. The transceiver means 36 are furthermore adapted to receive the speech synthesis track sent by the TTS server 50, via the telematic communication network 12.

The client computer 34 is configured to create the customized digital audiovisual content that is the result of the combination of the corresponding video component and audio component, and to display it and present it to the recipient.

The client 34 comprises transceiver means 36. The transceiver means 36 of the client 34 are adapted to receive the digital container generated by the data server 14, via the telematic communication network 12. The transceiver means 36 of the client 34 are furthermore adapted to send the "catalog call" to the speech catalog server 24, via the telematic communication network 12. The transceiver means 36 of the client 34 are furthermore adapted to receive the specific or predefined prerecorded human speech track sent by the speech catalog server 24 via the telematic communication network 12.

The client 34 comprises generation means 38 for generating a customized digital audiovisual content starting from the basic data enclosed in the digital container previously generated by the data server 14, in particular configured to generate the video component, and to compose and synchronize the audio component, constituted by one or more tracks, with the video component. In other words, the generation means 3 8 combine the template with the personal data, which are comprised in the basic data enclosed in the digital container, to generate result customized digital audiovisual content. In general, a result customized content is any kind of digital audiovisual output, including alphanumeric texts and animations (images, background music, and so forth).

In a preferred embodiment of the system 10 for generating customized digital audiovisual content with prerecorded human speech component according to the invention, the means 38 for generating a customized content comprise a browser that is compatible with HTML, at least in its version 5, with CSS, at least in its version 3, and with JavaScript, and generation occurs when the browser opens the digital container.

In practice, the generation means 38 of a customized content execute the instructions comprised in the player included in the digital container, which are necessary for the generation of the video component by said generation means 38 and of the audio component by the speech catalog server 24 and optionally by the TTS server 50, and also necessary for the composition and synchronization of the two generated components.

The generation means 38 of the client 34 comprise: an alphanumeric text data selection module 44, a concatenation module 45, a customized video component generation module 46, and a customized content synchronization module 47.

The alphanumeric text data selection module 44 is configured to extract from the digital container a sequence of alphanumeric text data comprised in the basic data, i.e., a sequence of one or more phrase portions. The alphanumeric text data selection module 44 is furthermore configured to select from the sequence of alphanumeric text data a single portion of said alphanumeric text data, i.e., a single phrase portion. The sequence of one or more phrase portions is the basis for the creation of the audio component of the customized digital audiovisual content.

As mentioned, the alphanumeric text data are comprised both in the template and in the personal data, which in turn are comprised in the basic data enclosed in the digital container.

It should be noted that the generation means 38 of the client 34 sequentially process all the single phrase portions selected by the alphanumeric text data selection module 44.

The concatenation module 45 is configured to associate in an orderly manner with the existing track sequence, if any, the speech track that corresponds to the single alphanumeric text data portion, i.e., to the single phrase portion, for example a prerecorded voice of the human type (from a catalog), TTS or static, thus creating the audio component of the customized digital audiovisual content.

Advantageously, the speech tracks are associated in an orderly manner with each other, thus avoiding the introduction of prolonged pauses (which are annoying for the end user) between one voice track and the next.

The customized digital audiovisual content can contain customized speech tracks, i.e., prerecorded human tracks and TTS tracks, and static speech tracks, i.e., tracks that do not change from one recipient to another. Sometimes these static speech tracks can be part of the construction of a sentence which appears to be a single sentence to the listener, although it is the result of a concatenation.

However, the customized voice tracks can have variable durations on the basis of the specific content to be pronounced, i.e., the single alphanumeric text data portion, and therefore it is not possible to synchronize each track with a given instant in time, otherwise there would be long pauses when playing back a short phrase portion in the space dedicated to a potentially longer phrase portion, or there would be overlaps between phrase portions.

In order to obviate this problem, the system allows the concatenation of multiple speech tracks in sequence, be they of the prerecorded human type (from a catalog), TTS or static. The multiple speech tracks in sequence are played back automatically one after the other. It is furthermore possible to introduce delays between one speech track and the other, to ensure that the sequence is not too tight to the point of spoiling the harmony of the pronounced phrase.

The customized video component generation module 46 is configured to create the video component of the customized digital audiovisual content starting from the basic data comprised in the digital container, in particular templates and personal data.

The customized content synchronization module 47 is configured to combine the video component and the audio component of the customized digital audiovisual content and to synchronize their simultaneous playback.

In one embodiment of the invention, the generation means 38 of the client 34 furthermore comprise a static speech track extraction module 48, configured to extract from the digital container a static speech track that corresponds to the single alphanumeric text data portion, i.e., to the single phrase portion, selected by the alphanumeric text data selection module 44. If the single phrase portion is not present in the catalog storage means 26 of the speech catalog server 24 and is not a TTS to be generated by means of the TTS server 50, then said phrase portion is a static audio content, in particular a static speech track, which is comprised in the basic data comprised in the digital container.

The client 34 comprises user interface means 40, configured to display and present to the recipient a plurality of commands, preferably in the form of buttons, which correspond to control functionalities of the customized digital audiovisual content.

The user interface means 40 are furthermore configured to detect the selection, by the recipient, one or more commands of the plurality of commands that correspond to control functionalities of the customized digital audiovisual content.

These user interface means 40 display the plurality of commands that correspond to control functionalities of the customized digital audiovisual content and detect their selection by the recipient, in a manner that is constant and continuous over time.

In a preferred embodiment of the system 10 for generating customized digital audiovisual content with prerecorded human speech component according to the invention, the configuration of the user interface means 40 occurs by means of the player.

In practice, the user interface means 40 allow the recipient to control in various manners, by means of the selection of appropriate commands displayed by the client 34, the generation and playback of the customized digital audiovisual content.

In a preferred embodiment of the system 10 for generating customized digital audiovisual content with prerecorded human speech component according to the invention, the user interface means 40 comprise a browser that is compatible with HTML, at least in its version 5, with CSS, at least in its version 3, and with JavaScript.

Finally, the client 34 comprises playback means 42 for the customized content generated by the generation means 38, adapted to display and present to the recipient the resulting customized content. Preferably, the playback means 42 comprise a screen or a display and at least one loudspeaker.

In a preferred embodiment of the system 10 for generating customized digital audiovisual content with prerecorded human speech component according to the invention, the playback means 42 comprise a browser that is compatible with HTML, at least in its version 5, with CSS, at least in its version 3, and with JavaScript.

In general, the customized content, displayed and presented to the recipient, is constituted by both a video component and an audio component, the former comprising a set of fixed and/or moving graphic elements, the latter comprising an audio speech.

The customized content is composed of a fixed part, i.e., the template that is common to all the recipients of the same type of electronic document or of the same type of remote communication, and of a variable or customizable part, i.e., the set of personal data related to a specific customer who is the recipient of the electronic document that the company has sent.

The customized digital audiovisual content is generated on the client side starting from the digital container, the latter including the information related to the customized digital audiovisual content, i.e., the template - with the corresponding animations - and the set of personal data, as well as the player.

In particular, the video component of the customized digital audiovisual content is generated directly on the client side, while the audio component of the customized digital audiovisual content is generated by means of service requests toward the speech catalog server 24 (i.e., "catalog call") and/or toward the TTS server 50 (i.e., "TTS call").

Going back to the example of the telephone bill, the personal data, i.e., the variable part, relate to the data and information contained in the bill itself, which are different for each customer of the telephone company, while the template, i.e., the fixed part, is a standard model that corresponds to the bill of said telephone company.

The video component of the generated and subsequently played back customized content contains images of parts of the bill which contains the personal data of the recipient customer, and its audio component reads and explains to the recipient customer the various parts of the bill.

For example, the audio component of the customized content that accompanies a telephone bill can be "Hello Mario, this is the bill for the period from January 1, 2016 to February 29, 2016. The balance is 53.00 euros and the due date for the payment is March 20, 2016. These are the details of your usage...".

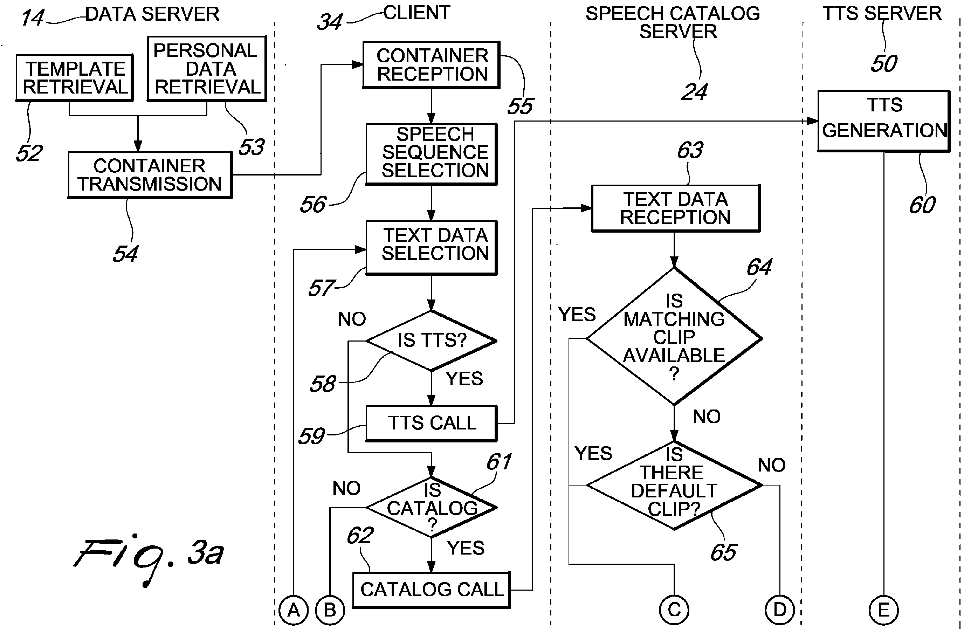

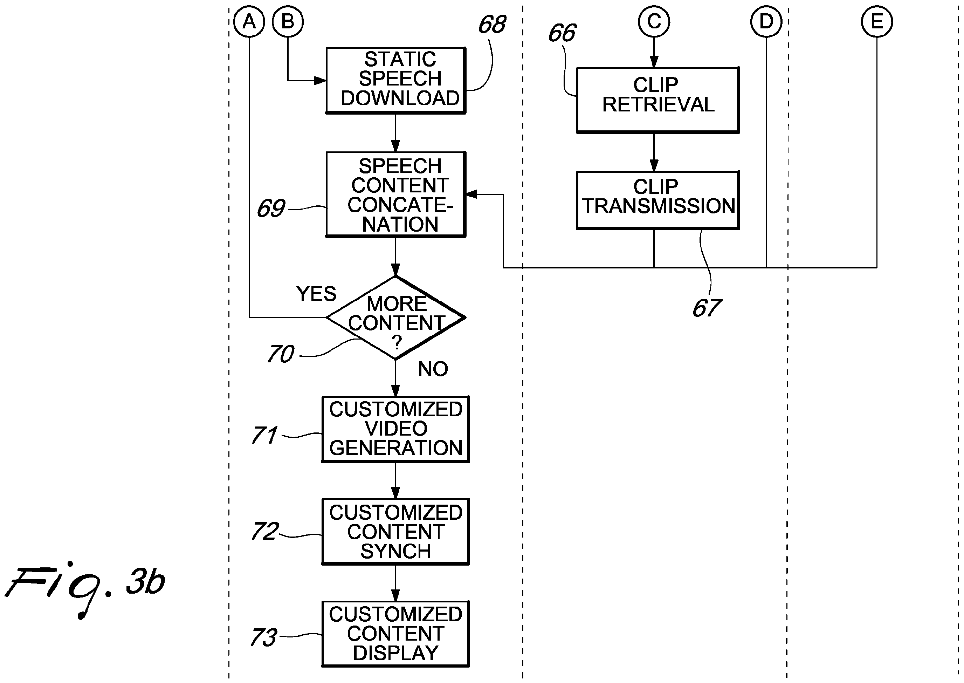

With reference to Figures 3a and 3b, the method for generating customized digital audiovisual content with prerecorded human speech component, i.e., the operation of the system 10, according to the invention, is described hereinafter.

Initially, in step 52, retrieval means 20 comprised in a data server computer 14 select and retrieve at least one template, stored in template storage means 16 comprised in the data server 14. At the same time, in step 53, retrieval means 20 of the data server 14 select and retrieve a set of personal data related to a single recipient, stored in the personal data storage means 18 comprised in the data server 14.

The selection and retrieval of the template and of the set of personal data by the retrieval means 20 occurs on the basis of the type of electronic document that the company wishes to send, on the basis of the type of remote communication that the company intends to perform, and/or on the basis of the specific customer who is the recipient of the sent electronic document.

Then, in step 54, the data server 14 generates in output a digital container comprising the information and the basic data of the customized content that will be generated by the client 34. The digital container comprises both a fixed part (template) and a variable or customizable part (personal data) and a player. The basic data of the customized content comprise at least one template, a set of personal data and a player.

In particular, in step 54, the data server 20 encloses the template retrieved in step 52 and the set of personal data retrieved in step 53, together with a player, preferably by using a corresponding PURL (Personalized Uniform Resource Locator), within a digital container, preferably an HTML container constituted by a portion of code in HTML language, at least in its version 5. Then the data server 20 sends the digital container thus generated toward a client computer 34 used by the recipient of the customized content, via transceiver means 22 and via a telematic communication network 12.

Then, in step 55, the client computer 34 receives the digital container sent by the data server 14, via transceiver means 36 and via the telematic communication network 12.

The client computer 34 is configured to create the customized digital audiovisual content, which is the result of the combination of the corresponding video components and audio components, and to display it and present it to the recipient.

The client 34 comprises means 38 for the generation of a customized digital audiovisual content starting from the digital container produced previously by the data server 14, in particular configured to generate the video component, and to compose and synchronize the audio component, constituted by one or more tracks, with the video component.

Once the digital container has been received, in step 56, an alphanumeric text data selection module 44 of the generation means 38 of the client 34 extracts from the digital container a sequence of alphanumeric text data comprised in the basic data, i.e., a sequence of one or more phrase portions.

In step 57, the alphanumeric text data selection module 44 of the generation means 38 of the client 34 selects from the sequence of alphanumeric text data a new single portion of said alphanumeric text data, i.e., a single phrase portion. The sequence of one or more phrase portions is the basis for creating the audio component of the customized digital audiovisual content.

As mentioned, the alphanumeric text data are comprised both in the template and in the personal data, which in turn are comprised in the basic data enclosed in the digital container.

In one embodiment of the invention, in step 58, the client 34 verifies whether the single alphanumeric text data portion, selected in step 57, is a phrase portion of the TTS type. In case of a negative outcome, one proceeds in step 61. In case of a positive outcome, in step 59, the client 34 requests the services offered by a Text To Speech (in acronym TTS) server computer 50 by means of an appropriate "TTS call" sent to said TTS server 50, via transceiver means 36 and via the telematic communication network 12; the "TTS call" comprises the single alphanumeric text data portion selected in step 57.

In this embodiment of the invention, in step 60, the TTS server 50 receives the "TTS call" of the client 34 and generates in output a speech synthesis track, which corresponds to the single alphanumeric text data portion comprised in the "TTS call", of the customized content that will be generated. The speech synthesis track generated by the TTS server 50 is part of the audio component of the customized content that will be generated by the client 34.

In step 61, the client 34 verifies whether the single alphanumeric text data portion, selected in step 57, is a prerecorded human type phrase portion (from a catalog). In case of a negative outcome, one proceeds in step 68. In case of a positive outcome, in step 62 the client 34 requests the services offered by a speech catalog server computer 24 by means of an appropriate "catalog call" sent to said speech catalog server 24 via transceiver means 36 and via the telematic communication network 12; the "catalog call" comprises the single alphanumeric text data portion selected in step 57.

The speech catalog server computer 24 is configured to retrieve and transmit in output a prerecorded human speech track or clip to be included in the audio component of the customized content that will be generated by the client 34. It should be noted that the audio component of a customized content can comprise one or more prerecorded human speech tracks or clips.

In step 63, the speech catalog server 24 receives the "catalog call" of the client 34, in particular comprising the single alphanumeric text data portion selected in step 57, via transceiver means 32 and via the telematic communication network 12.

As mentioned, the alphanumeric text data are comprised both in the template and in the personal data, which in turn are comprised in the basic data enclosed in the digital container.

In step 64, the speech catalog server 24 verifies whether catalog storage means 26 comprised in said speech catalog server 24 store in the various available catalogs a prerecorded human speech track that corresponds to the single alphanumeric text data portion comprised in the "catalog call". In the case of a negative outcome, one proceeds in step 65. In case of positive outcome, one proceeds in step 66.

In step 66, first retrieval means 28 of the speech catalog server 24 select and retrieve a prerecorded human speech track that corresponds to the single alphanumeric text data portion comprised in the "catalog call". In practice, the selection and retrieval of the prerecorded human speech track by the retrieval means 28 occurs on the basis of the positive outcome of an availability check of said prerecorded human speech track in the catalog storage means 26.

In one embodiment of the invention, in step 65, the speech catalog server 24 verifies whether catalog storage means 26 comprised in said speech catalog server 24 store in the various available catalogs a predefined prerecorded human speech track that corresponds to the type of the single alphanumeric text data portion comprised in the "catalog call". In the case of a negative outcome, the speech catalog server 24 issues an absence notification and one proceeds in step 69. In case of positive outcome, one proceeds in step 66.

In this embodiment, in step 66, second retrieval means 30 of the speech catalog server 24 select and retrieve a predefined prerecorded human speech track that corresponds to the type of the single alphanumeric text data portion comprised in the "catalog call". The predefined prerecorded human speech track is selected and retrieved each time it is not possible to identify a specific prerecorded human speech track. In practice, the selection and retrieval of the predefined prerecorded human by the retrieval means 30 occurs on the basis of the positive outcome of an availability check of said predefined prerecorded human speech track in the catalog storage means 26.

In step 67, following the selection and retrieval of a prerecorded human speech track, be it specific or predefined, the speech catalog server 24 sends this prerecorded human speech track toward the client 34, via transceiver means 32 and via the telematic communication network 12. In practice, this track is a portion of the audio component of a customized content that will be generated by the client 34.

In one embodiment of the invention, in step 68, a static speech track extraction module 48 of the generation means 38 of the client 34 extracts from the digital container a static speech track that corresponds to the single alphanumeric text data portion, i.e., to the single phrase portion, selected in step 57. If the single phrase portion is not present in the catalog storage means 26 of the speech catalog server 24 and is not a TTS to be generated by means of the TTS server 50, then said phrase portion is a static audio content, in particular a static speech track, which is comprised in the basic data comprised in the digital container.

In step 69, the transceiver means 36 of the client 34 receive the specific or predefined prerecorded human speech track sent by the speech catalog server 24, via the telematic communication network 12. In one embodiment of the invention, again in step 69, the transceiver means 36 of the client 34 receive the speech synthesis track sent by the TTS server 50, via the telematic communication network 12.

Again in step 69, a concatenation module 45 of the generation means 38 of the client 34 associates in an orderly manner with the existing track sequence, if any, the speech track that corresponds to the single alphanumeric text data portion, i.e., to the single phrase portion, for example of the prerecorded human type (from catalog), TTS or static, thus creating the audio component of the customized digital audiovisual content.

Advantageously, the speech tracks are associated in an orderly manner one after the other, thus avoiding the introduction of prolonged pauses (which are annoying for the end user) between one speech track and the next.

In step 70, the client 34 verifies whether in the sequence of alphanumeric text data comprised in the basic data, i.e., in the sequence of one or more phrase portions, extracted from the digital container in step 56, there is a new single alphanumeric text data portion. In case of a negative outcome, one proceeds in step 71. In case of a positive outcome, one returns to step 57.

In step 71, a customized video component generation module 46 of the generation means 38 of the client 34 creates the video component of the customized digital audiovisual content starting from the basic data comprised in the digital container, in particular templates and personal data.

In step 72, a customized content synchronization module 47 of the generation means 38 of the client 34 combined the video component and the audio component of the customized digital audiovisual content and synchronizes their simultaneous playback.

Finally, in step 73, playback means 42 of the client 34 display and present to the recipient the customized content generated by the generation means 38. Preferably, the playback means 42 comprise a screen or a display and at least one loudspeaker.

An embodiment of the system and of the method for generating customized digital audiovisual content with prerecorded human speech component according to the invention can be used to create a customized content aimed specifically at the customer who is the recipient of a bank statement, a bill or an invoice.

In this case the template, with the associated animations, and the player, comprising the functions and instructions required to generate the video component and the audio component of the customized content, are associated with the type of statement, bill or invoice, which changes from one provider to another, while the personal data in the customized content are associated with the specific customer who is the recipient of the statement, bill or invoice.

By way of example, in the case of a telephone bill, said personal data of the customer who is the recipient of said bill can include the name and surname of the customer, the taxpayer identification code of the customer, the identification code of the contract subscribed by the customer, the monthly cost for local calls, the monthly cost for long-distance calls, the monthly cost for data traffic, the balance of the bill, and so forth.

Of course two different recipient customers have different personal data, consequently leading to the generation of two different customized contents, which however use the same template, with the associated animations.

In practice it has been found that the invention fully achieves the intended aim and objects. In particular, it has been shown that the system and the method for generating customized digital audiovisual content with prerecorded human speech component thus conceived allow to overcome the quality limitations of the background art, since they allow to obtain better effects than those obtainable with known solutions and/or similar effects at a lower cost and with higher performance, in particular in the case of the generation of large quantities of customized content.

The audio component, comprising the prerecorded human speech tracks from a catalog, is integrated in real time with the video component of the customized digital audiovisual content. In practice, proximate to the starting time of the audio component, the system according to the invention selects and retrieves the prerecorded human speech tracks from the catalog, the client computer downloads them and synchronizes them with the correct frame for playback intended for the user. In this manner it is sufficient for the client to download from the catalog exclusively the prerecorded human speech tracks required for the specific customized digital audiovisual content.

One advantage of the system and method for generating customized digital audiovisual content with prerecorded human speech component according to the present invention resides in that they allow to provide a direct and effective communication strategy, aimed at capturing and holding the attention of end users, i.e., of the recipients of the customized content.

Another advantage of the system and method for generating customized digital audiovisual content with prerecorded human speech component according to the present invention resides in that they allow to obtain an audio component of the customized content that is as "natural" as possible.

A further advantage of the system and method for generating customized digital audiovisual content with prerecorded human speech component resides in that they allow a speech composition of the audio component of the customized content that is optimum and flexible with respect to the type and quantity of information on the recipient on whom a customized content is based.

Another advantage of the system and method for generating customized digital audiovisual content with prerecorded human speech component according to the present invention resides in that they allow to reduce the stress to which the computers are subjected in order to create the customized content, in particular reducing the load of the computational resources of said computers.

Although the system and method for generating customized digital audiovisual content with prerecorded human speech component according to the invention have been conceived in particular to create customized digital audiovisual content adapted to explain to a customer the content of an electronic document, such as a bank statement, a bill or an invoice of which he is the recipient, they can nonetheless be used more generally to create customized digital audiovisual content in general, intended for any application in which their use can be useful, improving the service offered; for example, said customized content can be applied in the marketing field or in the educational and schooling field.

The invention thus conceived is susceptible of numerous modifications and variations, all of which are within the scope of the appended claims. All the details may furthermore be replaced with other technically equivalent elements.

In practice, the materials used, so long as they are compatible with the specific use, as well as the contingent shapes and dimensions, may be any according to the requirements and the state of the art.

To conclude, the protective scope of the claims must not be limited by the illustrations or by the preferred embodiments presented in the description as example, but rather the claims must comprise all the characteristics of patentable novelty that reside within the present invention, including all the characteristics that would be treated as equivalent by the person skilled in the art.

The disclosures in Italian Patent Application No. 102018000006260 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A system (10) for generating customized digital audiovisual content with prerecorded human speech component, a customized digital audiovisual content comprising a video component and an audio component, comprising a data server computer (14), configured to produce a digital container comprising at least basic data of said customized content, said basic data of said customized content comprising at least one template, i.e., a fixed part, and a set of personal data, i.e., a variable or customizable part, and a client computer (34), which comprises means (42) for the playback of said customized content, said data server computer (14) communicating with said client computer (34) via a telematic communication network (12), **characterized in that** said client computer (34) comprises generation means (38) which comprise:
- an alphanumeric text data selection module (44) configured to extract from said digital container a sequence of alphanumeric text data comprised within said basic data, i.e., a sequence of one or more phrase portions, and to select from said alphanumeric text data sequence a single alphanumeric text data portion, i.e., a single phrase portion;
- a concatenation module (45) configured to associate in an orderly manner with an existing track sequence, i.e., said audio component of said customized digital audiovisual content, a prerecorded human speech track which corresponds to said single alphanumeric text data portion, i.e., to said single phrase portion;
- a customized video component generation module (46) configured to create said video component of said customized digital audiovisual content starting from said basic data comprised in said digital container, in particular templates and personal data; and
- a customized content synchronization module (47) configured to combine said video component and said audio component of said customized digital audiovisual visual content and to synchronize their simultaneous playback;
and **in that** said system (10) comprises a speech catalog server computer (24) which comprises catalog storage means (26) adapted to store a plurality of catalogs comprising prerecorded human speech tracks, and first retrieval means (28) adapted to select and retrieve from said catalog storage means (26) said prerecorded human speech track that corresponds to said single alphanumeric text data portion, said speech catalog server computer (24) communicating with said client computer (34) via said telematic communication network (12).

2. The system (10) for generating customized digital audiovisual content with prerecorded human speech component according to claim 1, **characterized in that** said data server computer (14) comprises retrieval means (20) adapted both to select and retrieve said at least one template stored in template storage means (16) comprised in said data server computer (14) and to select and retrieve said stored personal data set related to a single recipient, stored in personal data storage means (18) comprised in said data server computer (14).

3. The system (10) for generating customized digital audiovisual content with prerecorded human speech component according to claim 1 or 2, **characterized in that** each catalog of said catalog storage means (26) of said speech catalog server computer (24) further comprises a predefined prerecorded human speech track that corresponds to the type of prerecorded human speech track, and **in that** said speech catalog server computer (24) further comprises second retrieval means (30) adapted to select and retrieve from said catalog storage means (26) said predefined prerecorded human speech track that corresponds to the type of said single alphanumeric text data portion.

4. The system (10) for generating customized digital audiovisual content with prerecorded human speech component according to any one of the preceding claims, **characterized in that** it further comprises a Text To Speech or TTS server computer (50), said client computer (34) communicating with said TTS server computer (50) by means of said telematic communication network (12), said TTS server computer (50) being configured to generate a speech synthesis track which corresponds to said single alphanumeric text data portion.

5. The system (10) for generating customized digital audiovisual content with prerecorded human speech component according to any one of the preceding claims, **characterized in that** said generation means (38) of said client computer (34) further comprise a static speech track extraction module (48) configured to extract from said digital container a static speech track that corresponds to said single alphanumeric text data portion, i.e., to said single phrase portion, selected by said alphanumeric text data selection module (44).

6. A method for generating customized digital audiovisual content with prerecorded human speech component, a customized digital audiovisual content comprising a video component and an audio component, **characterized in that** it comprises the steps of:
- sending (54) a digital container comprising at least basic data of said customized content, said basic data of said customized content comprising at least one template, i.e., a fixed part, and a set of personal data, i.e., a variable or customizable part, by virtue of transceiver means (22) of a data server computer (14) toward a client computer (34);
- receiving (55) said digital container sent by said data server computer (14), by virtue of transceiver means (36) of said client computer (34);
- extracting (56) from said digital container a sequence of alphanumeric text data comprised in said basic data, i.e., a sequence of one or more phrase portions, by means of an alphanumeric text data selection module (44) comprised in generation means (38) of said client computer (34);
- selecting (57) from said sequence of alphanumeric text data a new single alphanumeric text data portion, i.e. a single phrase portion, by means of said alphanumeric text data selection module (44) comprised in said generation means (38) of said client computer (34);
- verifying (61) whether said single alphanumeric text data portion selected in step (57) is a prerecorded human type phrase portion;
- in case of a positive outcome, requesting (62) services offered by a speech catalog server computer (24) by means of a "catalog call" sent to said speech catalog server computer (24), said "catalog call" comprising said single alphanumeric text data portion selected in said step (57), by virtue of transceiver means (36) of said client computer (34);
- receiving (63) said "catalog call" of said client computer (34), in particular comprising said single alphanumeric text data portion, by virtue of transceiver means (32) of said speech catalog server computer (24);
- verifying (64) whether catalog storage means (26) comprised in said speech catalog server computer (24) store in various available catalogs a prerecorded human speech track that corresponds to said single alphanumeric text data portion comprised in said "catalog call";
- in case of a positive outcome, selecting and retrieving (66) said prerecorded human speech track that corresponds to said single alphanumeric text data portion comprised in said "catalog call", by virtue of first retrieval means (28) of said speech catalog server computer (24);
- sending (67) said prerecorded human speech track, by virtue of transceiver means (32) of said speech catalog server computer (24), toward said client computer (34);
- receiving (69) said prerecorded human speech track sent by said speech catalog server computer (24), by virtue of transceiver means (36) of said client computer (34);
- associating (69) in an orderly manner with an existing track sequence, i.e., said audio component of said customized digital audiovisual content, said speech track that corresponds to said single alphanumeric text data portion, i.e., to said single phrase portion, by means of a concatenation module (45) that is comprised in said generation means (38) of said client computer (34);
- verifying (70) whether in said sequence of alphanumeric text data comprised in said basic data, i.e., in the sequence of one or more phrase portions, extracted from said digital container in step (56), there is a new single alphanumeric text data portion;
- in case of a positive outcome, returning to step (57);
- in case of a negative outcome, creating (71) said video component of said customized digital audiovisual content starting from said basic data comprised in said digital container, in particular templates and personal data, by means of a customized video component generation module (46) that is comprised in said generation means (38) of said client computer (34);
- combining (72) said video component and said audio component of said customized digital audiovisual content and synchronizing (72) their simultaneous playback, by means of a customized content synchronization module (47) comprised in said generation means (38) of said client computer (34); and
- playing back (73) said customized content generated by said generation means (38), displaying it and presenting it by virtue of playback means (42) comprised in said client computer (34).

7. A method for generating customized digital audiovisual content with prerecorded human speech component according to claim 6, **characterized in that** it further comprises the steps of selecting and retrieving (52) at least one template, stored in template storage means (16) comprised in said data server computer (14), and selecting and retrieving (53) a set of personal data related to a single recipient, stored in personal data storage means (18) comprised in said data server computer (14), by virtue of retrieval means (20) comprised in said data server computer (14).

8. A method for generating customized digital audiovisual content with prerecorded human speech component according to claim 6 or 7, **characterized in that** it further comprises the step of verifying (65) whether catalog storage means (26) comprised in said speech catalog server computer (24) store in various available catalogs a predefined prerecorded human speech track that corresponds to the type of said single alphanumeric text data portion comprised in said "catalog call"; in case of a positive outcome, said step (66) consists in selecting and retrieving (66) said predefined prerecorded human speech track that corresponds to the type of said single alphanumeric text data portion comprised in said "catalog call" by virtue of second retrieval means (30) of said speech catalog server computer (24).

9. A method for generating customized digital audiovisual content with prerecorded human speech component according to any one of claims 6 to 8, **characterized in that** it further comprises the steps of:
- verifying (58) whether said single alphanumeric text data portion, selected in step (57), is a phrase portion of the Text To Speech or TTS type;
- in case of a positive outcome, requesting (59) services offered by a TTS server computer (50) by means of a "TTS call" sent to said TTS server computer (50), said "TTS call" comprising said single alphanumeric text data portion selected in said step (57), by virtue of transceiver means (36) of said client computer (34);
- receiving (60) said "TTS call" of said client computer (34), in particular comprising said single alphanumeric text data portion, by virtue of transceiver means of said TTS server computer (50);
- producing (60) a speech synthesis track that corresponds to said single alphanumeric text data portion comprised in said "TTS call";
- sending (60) said prerecorded human speech track, by virtue of transceiver means (32) of said speech catalog server computer (24), toward said client computer (34);
- receiving (69) said speech synthesis track sent by said TTS server computer (50) by virtue of transceiver means (36) of said client computer (34).

10. A method for generating customized digital audiovisual content with prerecorded human speech component according to any one of claims 6 to 9, **characterized in that** it further comprises the step of extracting (68) from said digital container a static speech track that corresponds to said single alphanumeric text data portion, i.e., to said single phrase portion, selected in step (57), by means of a static speech track extraction module (48) of said generation means (38) of said client computer (34).
